# DEMANDE DE BREVET EUROPEEN

(11) **EP 4 632 969 A1**
(43) Date de publication de la demande: **15.10.2025**
(21) Numéro de dépôt: 25305512.3
(22) Date de dépôt: 09.04.2025
(51) Int. Cl.: H01R 43/28, H02G 1/12, H01B 13/00

(54) **PROCÉDÉ DE FABRICATION D'UN CONDUCTEUR ÉLECTRIQUE PRÉVU POUR ÉQUIPER UN APPAREILLAGE ÉLECTRIQUE**

(30) Priorité: 12.04.2024 FR 2403844
(71) Demandeur: Legrand France, 87000 Limoges (FR); Legrand SNC, 87000 Limoges (FR)
(72) Inventeur: LAURAT, Pierre, 87000 Limoges (FR)
(74) Mandataire: Santarelli

(57) **Abrégé**

L'invention concerne un procédé de fabrication d'un conducteur électrique prévu pour équiper un appareillage électrique, comportant les étapes de fournir (101) un conducteur électrique nu réalisé à partir de cuivre et de décaper et texturer (103) au moins une portion du conducteur électrique nu à l'aide d'un dispositif laser émettant un rayonnement comportant une longueur d'onde comprise entre environ 700 nm et environ 1 600 nm.

## Description

### DOMAINE TECHNIQUE DE L'INVENTION

L'invention concerne un procédé de fabrication d'un conducteur électrique prévu pour équiper un appareillage électrique.

L'invention concerne également un conducteur électrique prévu pour équiper un appareillage électrique, obtenu par la mise en oeuvre du procédé, et un appareillage électrique pourvu d'au moins un tel conducteur électrique.

### ÉTAT DE LA TECHNIQUE

Dans le domaine de l'appareillage électrique, il est connu de faire des essais, notamment normalisés, pour tester et vérifier l'échauffement provoqué par le passage d'un courant dans l'appareillage électrique.

En particulier, un tel appareillage électrique peut comporter un ou plusieurs conducteurs électriques et des mesures d'échauffement peuvent être réalisées sur l'appareillage électrique et sur ses conducteurs électriques.

De telles mesures sont représentatives d'une résistance définie par une composante dite résistance volumique liée aux volumes et aux formes des éléments conducteurs que l'appareillage comporte et au passage d'un courant électrique entre ces différents éléments, et une autre composante dite résistance de contact s'établissant également au passage du courant électrique entre ces différents éléments.

Les différents éléments présentent des géométries déterminées et sont réalisés dans des matériaux déterminés. La composante volumique de la résistance dépend notamment de la géométrie de ces différents éléments électriquement conducteurs et de la résistivité des matériaux utilisés ; tandis que la composante de contact de la résistance dépend notamment d'une rugosité de surface de ces différents éléments, de leur propension respective à la corrosion atmosphérique, et des sollicitations subies par contact et/ou frottement.

La résistance de contact est ainsi intrinsèquement non déterminable de manière théorique et plus difficile à contrôler que la résistance volumique.

Pour satisfaire aux essais, notamment normatifs, il est nécessaire d'avoir une résistance de contact minimum pour éviter un échauffement trop important de l'appareillage électrique et pour assurer des connexions électriques fiables au sein de l'appareillage électrique et entre ce dernier et d'autres appareillages auxquels il peut être raccordé électriquement.

Par exemple, pour des appareillages électriques du type prise de courant, il peut être fait référence à la norme CEI 60884-1.

Une solution connue en particulier pour limiter la résistance de contact est par exemple d'utiliser des conducteurs électriques à base de cuivre ou d'alliage de cuivre, qui sont recouverts de revêtements composés d'étain, d'argent, d'or, de palladium ou encore de nickel.

On parle par exemple de conducteurs électriques en cuivre ou en laiton, dits étamés ou argentés s'ils présentent respectivement un revêtement en étain ou en argent.

### EXPOSÉ DE L'INVENTION

L'invention concerne un procédé de fabrication d'un conducteur électrique prévu pour équiper un appareillage électrique, qui soit simple et commode à mettre en oeuvre et qui rende particulièrement performant le conducteur électrique, notamment en terme de résistance de contact.

L'invention a ainsi pour objet, selon un premier aspect, un procédé de fabrication d'un conducteur électrique prévu pour équiper un appareillage électrique, comportant les étapes de fournir un conducteur électrique nu réalisé à partir de cuivre et de décaper et texturer au moins une portion du conducteur électrique nu à l'aide d'un dispositif laser émettant un rayonnement comportant une longueur d'onde comprise entre environ 700 nm et environ 1 600 nm.

En d'autres termes, le procédé comporte une étape d'émission d'un faisceau de rayonnement laser présentant une longueur d'onde comprise entre environ 700 nm et environ 1 600 nm à la fois pour décaper et texturer au moins une portion du conducteur électrique nu réalisé à partir de cuivre.

La mise en oeuvre des étape combinées de décapage et de texturation par rayonnement laser dans une telle fourchette de longueurs d'ondes sur un conducteur électrique nu à base de cuivre, confère un état de surface à la portion décapée et texturée du conducteur électrique qui permet de réduire la résistance électrique de contact lorsque ce conducteur électrique est au contact d'un autre conducteur électrique et qu'un courant électrique les traverse.

En particulier, grâce à cet état de surface obtenu par la mise en oeuvre des étape de décapage et de texturation, l'inventeur s'est aperçu qu'il est possible de baisser la résistance de contact en s'affranchissant de l'ajout sur le conducteur d'un revêtement additionnel du type dépôt d'étain, d'argent, d'or, de palladium ou encore de nickel etc.

Un conducteur électrique nu réalisé à partir de cuivre est un conducteur électrique nu à base de cuivre ou à base d'alliage de cuivre.

Des caractéristiques préférées, simples, commodes et économiques du procédé selon l'invention sont présentées ci-après.

Le conducteur électrique nu à base de cuivre peut être du cuivre ou un alliage de cuivre, notamment du laiton.

Le dispositif laser peut être un laser nanosecondes à impulsions, notamment configuré pour émettre un faisceau de rayonnement laser par impulsions.

Le dispositif laser peut être un laser à fibre et à émission pulsée, notamment configuré pour émettre un faisceau de rayonnement laser par impulsions.

Le procédé de fabrication peut comporter une étape de paramétrer le dispositif laser, en fonction de paramètres déterminés sélectionnés parmi au moins l'un des paramètres suivants : une longueur d'onde, une durée d'impulsion, une énergie par impulsion, une fréquence d'impulsions, un diamètre de faisceau, une vitesse de balayage et une puissance.

Le dispositif laser peut émettre un faisceau de rayonnement par impulsions qui comporte une longueur d'onde égale à environ 1 070 nm.

Le dispositif laser peut émettre un faisceau de rayonnement par impulsions qui comporte une durée d'impulsion égale à environ 120 ns.

Le dispositif laser peut émettre un faisceau de rayonnement par impulsions qui comporte une énergie par impulsion égale à environ 300 µJ.

Le dispositif laser peut émettre un faisceau de rayonnement par impulsions qui comporte une fréquence d'impulsions égale à environ 60 kHz.

Le dispositif laser peut émettre un faisceau de rayonnement par impulsions qui comporte un diamètre de faisceau égal à environ 45 µm.

Le dispositif laser peut comporter un système de balayage à miroirs galvanométriques.

Le dispositif laser peut émettre un faisceau de rayonnement par impulsions qui est balayé sur l'au moins une portion du conducteur électrique nu à une vitesse égale à environ 2 700 mm/s.

Le dispositif laser peut émettre un faisceau de rayonnement par impulsions à une puissance moyenne égale à environ 18 W.

On notera que la puissance moyenne correspond à une puissance dite « efficace », qui est une moyenne de la puissance dans le temps. Il ne s'agit pas d'une puissance dite crête correspondant à la puissance pendant chaque impulsion et qui est par définition bien plus élevée que la puissance moyenne puisque cette dernière tient compte de la puissance qui est nulle entre les impulsions.

En d'autres termes, le procédé peut comporter une étape d'émission d'un faisceau de rayonnement laser par impulsions présentant au moins l'un des paramètres parmi : une longueur d'onde d'environ 1 070 nm, une durée d'impulsion d'environ 120 ns, une énergie par impulsion d'environ 300 µJ, une fréquence d'impulsions d'environ 60 kHz, un diamètre de faisceau d'environ 45 µm, une vitesse de balayage d'environ 2 700 mm/s, et une puissance moyenne d'environ 18 W ; ceci permettant les actions combinée de décapage et de texturation de la portion du conducteur électrique nu à base de cuivre.

L'étape de décapage et texturation peut être configurée pour former un réseau de cratères sur l'au moins une portion du conducteur électrique nu.

L'invention a aussi pour objet, selon un deuxième aspect, un conducteur électrique nu prévu pour équiper un appareillage électrique et obtenu directement par la mise en oeuvre du procédé tel que décrit ci-dessus, le conducteur électrique nu présentant un réseau de cratères sur au moins une portion décapée et texturée.

Le réseau de cratères peut présenter un motif périodique.

Les cratères peuvent présenter chacun une dépression en renfoncement dans la portion du conducteur électrique nu et un bord périphérique autour de la dépression et en saillie.

Les cratères peuvent globalement présenter un diamètre égal à environ 30 µm, tenant compte du fait que les cratères n'ont pas nécessairement un contour parfaitement circulaire.

L'invention a également pour objet, selon un troisième aspect, un appareillage électrique comportant au moins un conducteur électrique nu tel que décrit ci-dessus.

L'appareillage électrique peut être un disjoncteur, un interrupteur différentiel, une prise ou tout autre appareillage électrique, électronique ou électrotechnique comportant par exemple des bornes de raccordement ou des connexions électriques.

### BRÈVE DESCRIPTION DES FIGURES

L'invention, selon un exemple de réalisation, sera bien comprise et ses avantages apparaitront mieux à la lecture de la description détaillée qui suit, donnée à titre indicatif et nullement limitatif, en référence aux dessins annexés.
La figure 1 est un schéma-blocs montrant des étapes d'un procédé de fabrication d'un conducteur électrique nu prévu pour équiper un appareillage électrique, conforme à l'invention.
La figure 2 représente schématiquement et partiellement un dispositif laser pour la mise en oeuvre d'au moins une étape du procédé de fabrication de la figure 1.
La figure 3 est une vue macroscopique d'une portion de conducteur électrique nu obtenue directement par la mise en oeuvre du procédé de fabrication de la figure 1.
La figure 4 est une vue de détail, microscopique, de la portion de conducteur électrique nu obtenue directement par la mise en oeuvre du procédé de fabrication de la figure 1, montrant un réseau de cratères.
La figure 5 est une vue schématique d'un cratère illustré sur la figure 4.
La figure 6 est une vue prise en coupe selon VI-VI sur la figure 5.
La figure 7 est une vue similaire à celle de la figure 4, montrant la portion de conducteur électrique nu à la suite d'un essai de résistance électrique de contact.
La figure 8 est une vue similaire à celle de la figure 4, montrant la portion de conducteur électrique nu directement obtenue par la mise en oeuvre d'un procédé de fabrication différent du procédé de fabrication selon l'invention.

### DESCRIPTION DÉTAILLÉE DE L'INVENTION

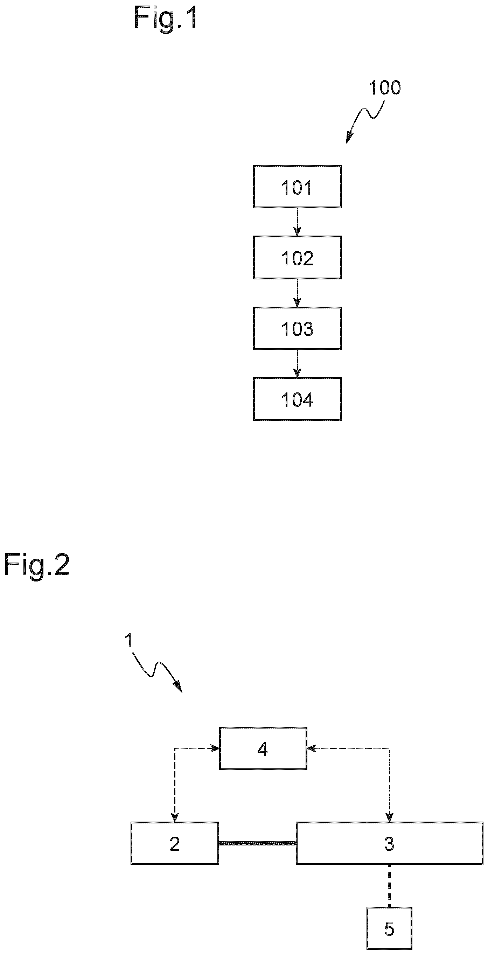

La figure 1 représente un procédé de fabrication 100 d'un conducteur électrique nu prévu pour équiper un appareillage électrique, dont la résistance dite de contact est particulièrement faible et satisfait à des essais, notamment normatifs, d'échauffement.

Le procédé de fabrication 100 comporte ici une étape de fournir 101 un conducteur électrique nu réalisé à partir de cuivre, c'est-à-dire en cuivre ou en alliage de cuivre, notamment en laiton.

Le conducteur électrique nu peut être en lame, en bande, en fil, en barre ou sous toute autre forme directement exploitable ensuite ou pouvant être découpée pour être utilisée dans l'appareillage électrique.

L'appareillage électrique peut être un disjoncteur, un interrupteur différentiel, une prise ou tout autre appareillage électrique, électronique ou électrotechnique comportant par exemple des bornes de raccordement ou des connexions électriques.

Le procédé de fabrication 100 comporte une étape de paramétrer 102 un dispositif laser, en fonction de paramètres déterminés sélectionnés parmi au moins l'un des paramètres suivants : une longueur d'onde, une durée d'impulsion, une énergie par impulsion, une fréquence d'impulsions, un diamètre de faisceau, une vitesse de balayage et une puissance.

Le procédé de fabrication 100 comporte une étape de décaper et texturer 103 au moins une portion du conducteur électrique nu à l'aide du dispositif laser émettant un rayonnement comportant une longueur d'onde comprise entre environ 700 nm et environ 1 600 nm.

En d'autres termes, les actions combinée de décapage et de texturation de la portion du conducteur électrique nu à base de cuivre sont réalisées simultanément à l'aide du dispositif laser émettant un rayonnement dans le proche infra-rouge.

Le procédé de fabrication 100 comporte une étape d'utiliser 104 le conducteur électrique nu à base de cuivre ainsi décapé et texturé dans un appareillage électrique, soit directement soit après découpe et/ou pliage et/ou toute autre action de conformation nécessaire à son emploi.

La figure 2 représente le dispositif laser 1 configuré pour la mise en oeuvre du procédé de fabrication de la figure 1.

Le dispositif laser 1 comporte une source laser 2, un bloc optique 3 et une unité de contrôle et de commande 4 configurée pour contrôler et commander la source laser 2 et le bloc optique 3.

L'unité de contrôle et de commande 4 comporte des éléments systémiques configurés pour exécuter un programme d'ordinateur pour mettre en oeuvre au moins l'étape de paramétrage du dispositif laser 1 et l'étape de décapage et de texturation du procédé de fabrication de la figure 1.

En d'autres termes, l'unité de contrôle et de commande 4 peut être configurée d'une part pour recevoir des informations représentatives d'au moins une portion du conducteur électrique nu à base de cuivre 5 à décaper et texturer, dont par exemple le matériau utilisé et les dimensions géométriques de la portion à traiter ; et d'autre part pour envoyer des paramètres de fonctionnement à la source laser 2 et/ou au bloc optique 3 pour mettre en oeuvre l'étape de décapage et de texturation, dont au moins l'un des paramètres parmi la longueur d'onde, la durée d'impulsion, l'énergie par impulsion, la fréquence d'impulsions, le diamètre de faisceau, la vitesse de balayage et la puissance.

Dans l'exemple illustré, la source laser 2 est configurée pour émettre un faisceau de rayonnement dans le proche infra-rouge par impulsions.

En particulier, la source laser 2 est ici formée par un laser à fibre et à émission pulsée, du type nanosecondes à impulsions, configuré pour émettre le faisceau de rayonnement laser par impulsions sur la portion du conducteur électrique nu à base de cuivre 5, qui comporte les paramètres de fonctionnement ci-après.

Le dispositif laser 1 émet ici un faisceau de rayonnement par impulsions qui comporte une longueur d'onde égale à environ 1 070 nm.

Le dispositif laser 1 émet ici un faisceau de rayonnement par impulsions qui comporte une durée d'impulsion égale à environ 120 ns.

Le dispositif laser 1 émet ici un faisceau de rayonnement par impulsions qui comporte une énergie par impulsion égale à environ 300 µJ.

Le dispositif laser 1 émet ici un faisceau de rayonnement par impulsions qui comporte une fréquence d'impulsions égale à environ 60 kHz.

Le dispositif laser 1 émet ici un faisceau de rayonnement par impulsions qui comporte un diamètre de faisceau égal à environ 45 µm.

Dans l'exemple illustré, le bloc optique 3 du dispositif laser 1 comporte un système de balayage à miroirs galvanométriques, aussi appelé scanner.

Le dispositif laser 1 émet ici un faisceau de rayonnement par impulsions qui est balayé sur la portion du conducteur électrique nu à base de cuivre 5 à une vitesse égale à environ 2 700 mm/s.

Le dispositif laser 1 émet en outre ici un faisceau de rayonnement par impulsions à une puissance moyenne égale à environ 18 W et à une puissance crête de l'ordre de 3 kW environ.

La puissance moyenne correspond à une puissance dite « efficace », qui est une moyenne de la puissance dans le temps, tandis que la puissance crête correspond à la puissance pendant chaque impulsion et est par définition plus élevée que la puissance moyenne puisque cette dernière tient compte de la puissance qui est nulle entre les impulsions.

On notera que le bloc optique 3 peut permettre de focaliser le faisceau de rayonnement laser de sorte à pouvoir réaliser un motif déterminé sur la portion de conducteur électrique nu à base de cuivre 5.

En d'autres termes, grâce au dispositif laser 1, le procédé peut comporter une étape d'émission d'un faisceau de rayonnement laser par impulsions présentant au moins l'un des paramètres parmi : une longueur d'onde comprise entre environ 700 nm et environ 1 600 nm et par exemple d'environ 1 070 nm, avec une durée d'impulsion d'environ 120 ns, une énergie par impulsion d'environ 300 µJ, une fréquence d'impulsions d'environ 60 kHz, un diamètre de faisceau d'environ 45 µm, une vitesse de balayage d'environ 2 700 mm/s, et une puissance moyenne d'environ 18 W ; ceci permettant les actions combinée de décapage et de texturation selon un motif déterminé de la portion du conducteur électrique nu à base de cuivre 5.

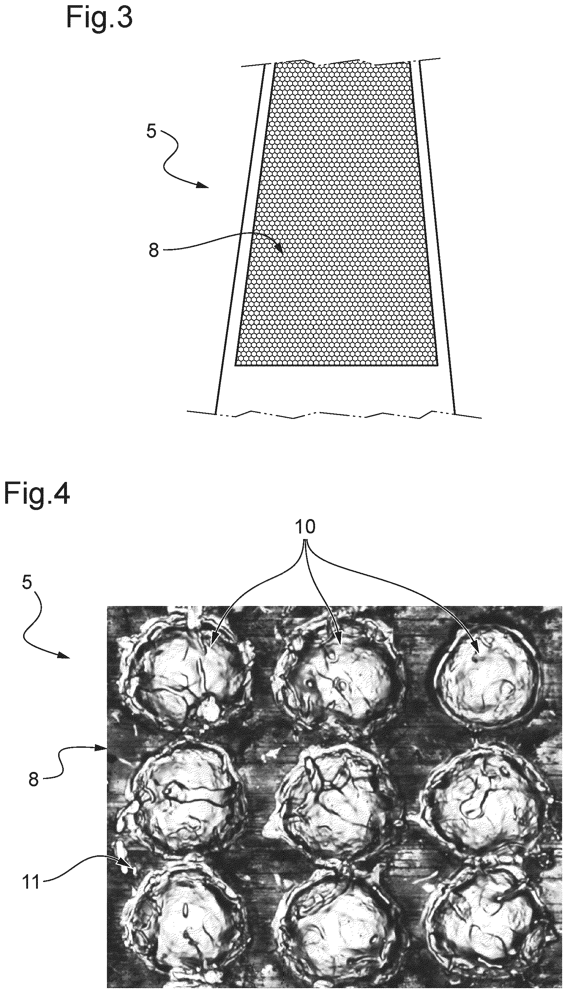

En particulier, dans l'exemple illustré notamment sur les figures 3 et 4, l'étape de décapage et texturation peut être configurée pour former un motif en réseau 8 de cratères sur la portion traitée du conducteur électrique nu à base de cuivre 5, ici en forme de lame.

Après l'étape de décapage et texturation, la portion traitée du conducteur électrique nu à base de cuivre 5 présente donc une pluralité de cratères 10 formant le réseau 8 selon un motif par exemple périodique, avec des cratères 10 formés globalement à équidistance les uns des autres et présentant des géométries et dimensions assez similaires.

On notera que les paramètres de fonctionnement susvisés sont ici sélectionnés pour obtenir une densité déterminée de cratères sur la portion traitée du conducteur électrique nu à base de cuivre 5.

Sur la figure 4 sont notamment visibles neuf cratères 10 formés sur une première face 11 de la portion traitée du conducteur électrique nu à base de cuivre 5 et ayant chacun un diamètre égal à environ 30 µm, tenant compte du fait que les cratères n'ont pas nécessairement un contour parfaitement circulaire.

Chaque cratère 10 est ici réalisé par une seule impulsion du dispositif laser.

En variante, un ou plusieurs cratères pourraient être réalisés par plusieurs impulsions du dispositif laser.

A chaque impulsion, la chaleur générée permet à la fois de désolidariser au moins partiellement des composés non métalliques présents sur la portion de conducteur électrique nu à base de cuivre 5 et de faire fondre la matière du conducteur électrique nu pour prendre la forme du cratère 10.

Le motif périodique du réseau 8 de cratère 10 peut être obtenu en contrôlant notamment un déplacement du faisceau de rayonnement et un déclenchement des impulsions.

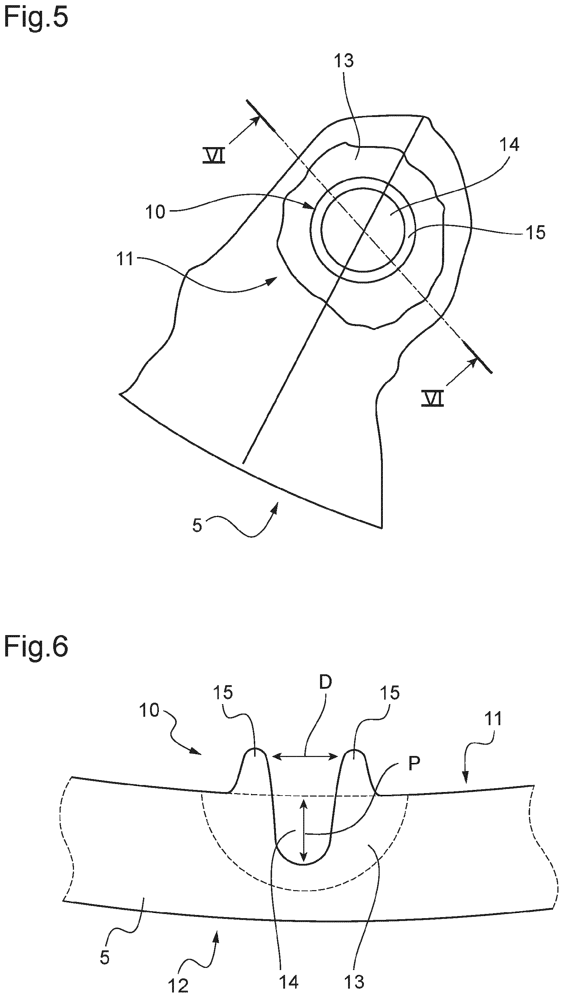

Dans l'exemple illustré sur la figure 5, on notera que le déplacement du faisceau de rayonnement est contrôlé avec un chevauchement dit horizontal des lignes de balayage, de l'ordre d'environ 20 % à environ 25 %, sur la portion traitée du conducteur électrique nu à base de cuivre 5, et quasiment sans chevauchement vertical ou presque, par exemple avec une valeur de chevauchement vertical, dite de « hatch », de l'ordre de 55 µm.

Les figures 5 et 6 représentent schématiquement un exemple de cratère 10 formé par la mise en oeuvre de l'étape de décapage et texturation sur la portion traitée du conducteur électrique nu à base de cuivre 5.

Chaque cratère 10 se trouve dans une zone de traitement 13 qui est une zone affectée thermiquement par l'étape de décapage et texturation.

Chaque cratère 10 présente une dépression 14 en renfoncement dans la portion du conducteur électrique nu à base de cuivre 5, et un bord périphérique 15 autour de la dépression 14 et en saillie de la première face 11.

La dépression 14 est ouverte sur la première face 14 et s'enfonce en direction d'une deuxième face 12 de la portion du conducteur électrique nu à base de cuivre 5, opposée à la première face 11.

Le cratère 10 a un diamètre D, ici pris entre le bord périphérique 15, et une profondeur P, ici prise dans la dépression 14 depuis la première face 11 sans le bord périphérique 15 en saillie, vers la deuxième face 12.

Même si les cratères 10 ne sont parfaitement ronds, on peut estimer qu'ils présentent ici globalement un diamètre D égal à environ 30 µm et une profondeur de l'ordre de 2 µm environ.

Le bord périphérique 15 des cratères 10 peut en outre s'étendre en saillie de la première face 11 d'une hauteur (non représentée) de l'ordre de 1 µm environ.

On notera que cette hauteur peut varier d'un cratère à l'autre et qu'elle peut être ajustée notamment en fonction de la vitesse de balayage et de la valeur de chevauchement vertical.

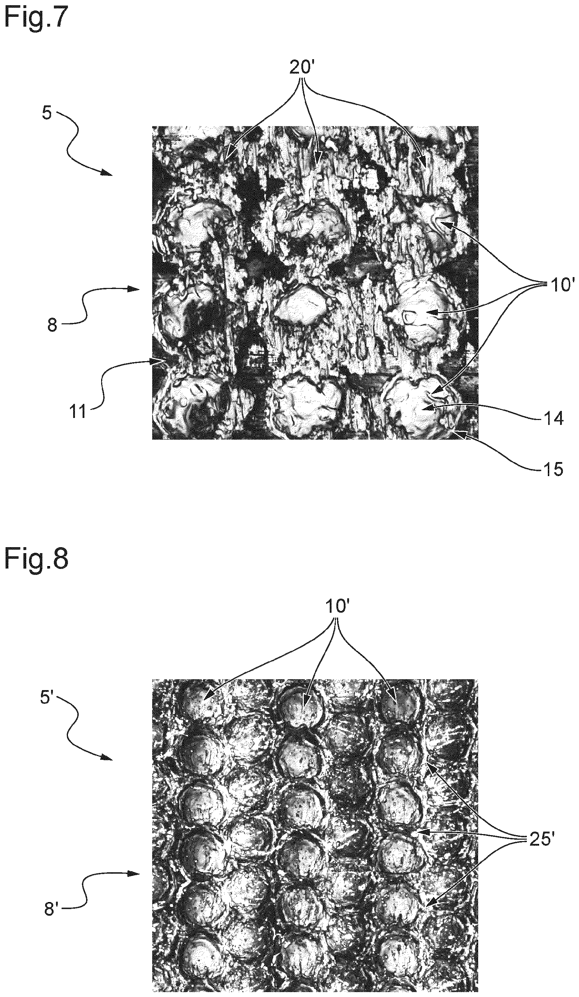

La figure 7 montre la portion du conducteur électrique nu à base de cuivre 5 de la figure 5, à l'issue d'un essai de résistance électrique de contact.

La mesure de résistance électrique de contact permet ici de quantifier et/ou de qualifier l'effet technique de l'étape de décapage et texturation sur la portion du conducteur électrique nu à base de cuivre 5, en particulier sur le réseau 8 de cratères 10.

La mesure a été réalisé par application d'un fil de cuivre soumis à une force de contact déterminée et le long d'une distance de contact déterminée, sur la première face 11 de la portion du conducteur électrique nu à base de cuivre 5.

En particulier, dans l'exemple illustré, la force de contact exercée sur le fil de cuivre est égale à environ 20 N sur une distance de frottement d'environ 1 mm.

Il est possible de déduire de cette mesure une distribution de la résistance de contact de la portion du conducteur électrique nu à base de cuivre 5 traitée par le procédé susvisé.

En particulier, cela se traduit par une plus forte adhésion du cuivre après retrait du fil de cuivre de la portion du conducteur électrique nu à base de cuivre 5 traitée par le procédé susvisé, comme visible sur la figure 5 où des résidus de cuivre 20 sont présents sur la première face 11.

L'adhésion, synonyme d'un bon contact avec peu de résistance, a ici eu lieu de manière substantielle avec le bord périphérique 15 autour des dépressions 14 de cratères 10 de sorte qu'à l'endroit des résidus de cuivre 20, il est plus difficile de distinguer le détail des cratères 10.

En comparaison avec la figure 5, la figure 8 montre une portion de conducteur électrique nu à base de cuivre 5' traitée par un procédé différent du procédé décrit ci-dessus, en ce que le dispositif laser comporte une source laser configurée pour émettre à une longueur dans le visible plutôt que dans le proche infra-rouge, et par exemple à environ 500 nm.

Un réseau 8' de cratères 10' est formé sur la portion de conducteur électrique nu à base de cuivre 5', tandis qu'un dépôt 25' ici de couleur noire recouvre entièrement ou presque entièrement les cratères 10' de sorte qu'il est impossible ou presque d'observer des dépressions entourées de bords périphériques en saillies.

Un tel dépôt 25' est représentatif de résidus solides, aussi appelés « scories » en terminologie anglo-saxonne, synonyme d'un décapage non réalisé ou à tout le moins insuffisant, et est donc préjudiciable à l'obtention d'une résistance de contact faible.

Dans le procédé selon l'invention décrit ci-dessus, l'étape d'émission du faisceau de rayonnement laser présentant une longueur d'onde déterminée dans le proche infra-rouge permet à la fois de décaper et de texturer au moins une portion du conducteur électrique nu réalisé à partir de cuivre.

La mise en oeuvre des étapes combinées de décapage et de texturation par rayonnement laser à une telle longueur d'onde sur un conducteur électrique nu à base de cuivre, confère ainsi un état de surface à la portion décapée et texturée du conducteur électrique qui permet de réduire la résistance électrique de contact lorsque ce conducteur électrique nu est au contact d'un autre conducteur électrique et qu'un courant électrique les traverse.

En particulier, grâce à cet état de surface obtenu par la mise en oeuvre des étape de décapage et de texturation, l'inventeur s'est aperçu qu'il est possible de baisser la résistance de contact en s'affranchissant de l'ajout sur le conducteur d'un revêtement additionnel du type dépôt d'étain, d'argent, d'or, de palladium ou encore de nickel etc.

Des variantes non illustrées sont décrites ci-dessous.

Le procédé de fabrication peut comporter une étape de paramétrer le dispositif laser, en fonction de paramètres déterminés sélectionnés parmi au moins l'un paramètres suivants : une longueur d'onde, une durée d'impulsion, une énergie par impulsion, une fréquence d'impulsions, un diamètre de faisceau, une vitesse de balayage et une puissance, avec le dispositif laser qui peut émettre un faisceau de rayonnement par impulsions qui comporte une longueur d'onde comprise entre environ 700 nm et environ 1 600 nm, qui comporte une durée d'impulsion comprise entre environ 80 ns et 160 ns, qui comporte une énergie par impulsion comprise entre environ 200 µJ et environ 400 µJ, qui comporte une fréquence d'impulsions comprise entre environ 40 kHz et environ 80 kHz, qui comporte un diamètre de faisceau compris entre environ 30 µm et environ 60 µm, qui est balayé à une vitesse comprise entre environ 2 000 mm/s et environ 3 500 mm/s, et qui fonctionne à une puissance moyenne comprise entre environ 16 W et 22 W.

De tels paramètres de fonctionnement sont sélectionnés pour obtenir une densité déterminée de cratères sur la portion traitée du conducteur électrique nu à base de cuivre, et peut dépendre notamment de propriétés de réflectivité et de conductivité de la portion du conducteur électrique nu, par exemple variables s'il s'agit de cuivre, de laiton, etc.

Le dispositif laser peut être dépourvu d'un système de balayage à miroirs galvanométriques.

Le réseau de cratères peut présenter un motif périodique différent de celui illustré sur la figure 5 notamment, et présenter un diamètre compris par exemple entre environ 20 µm et environ 40 µm.

Plus généralement, l'invention ne se limite pas aux exemples décrits et représentés.

## Revendications

1. Procédé de fabrication d'un conducteur électrique prévu pour équiper un appareillage électrique, comportant les étapes de fournir (101) un conducteur électrique nu réalisé à partir de cuivre (5) et de décaper et texturer (103) au moins une portion du conducteur électrique nu à l'aide d'un dispositif laser (1) émettant un rayonnement comportant une longueur d'onde comprise entre environ 700 nm et environ 1 600 nm.

2. Procédé de fabrication selon la revendication 1, **caractérisé en ce que** le conducteur électrique nu à base de cuivre (5) est réalisé en cuivre ou en un alliage de cuivre, notamment en laiton.

3. Procédé de fabrication selon l'une des revendications 1 et 2, **caractérisé en ce que** le dispositif laser (1) est un laser nanosecondes à impulsions émettant un faisceau de rayonnement laser par impulsions.

4. Procédé de fabrication selon l'une quelconque des revendications 1 à 3, **caractérisé en ce que** le dispositif laser (1) est un laser à fibre et à émission pulsée émettant un faisceau de rayonnement laser par impulsions.

5. Procédé de fabrication selon l'une quelconque des revendications 1 à 4, **caractérisé en ce que** le dispositif laser (1) émet un faisceau de rayonnement par impulsions qui comporte une longueur d'onde égale à environ 1 070 nm.

6. Procédé de fabrication selon l'une quelconque des revendications 1 à 5, **caractérisé en ce que** le dispositif laser (1) émet un faisceau de rayonnement par impulsions qui comporte une durée d'impulsion égale à environ 120 ns.

7. Procédé de fabrication selon l'une quelconque des revendications 1 à 6, **caractérisé en ce que** le dispositif laser (1) émet un faisceau de rayonnement par impulsions qui comporte une énergie par impulsion égale à environ 300 µJ.

8. Procédé de fabrication selon l'une quelconque des revendications 1 à 7, **caractérisé en ce que** le dispositif laser (1) émet un faisceau de rayonnement par impulsions qui comporte une fréquence d'impulsions égale à environ 60 kHz.

9. Procédé de fabrication selon l'une quelconque des revendications 1 à 8, **caractérisé en ce que** le dispositif laser (1) émet un faisceau de rayonnement par impulsions qui comporte un diamètre de faisceau égal à environ 45 µm.

10. Procédé de fabrication selon l'une quelconque des revendications 1 à 9, **caractérisé en ce que** le dispositif laser émet (1) un faisceau de rayonnement par impulsions qui est balayé sur l'au moins une portion du conducteur électrique nu à une vitesse égale à environ 2 700 mm/s.

11. Procédé de fabrication selon l'une quelconque des revendications 1 à 10, **caractérisé en ce que** le dispositif laser (1) émet un faisceau de rayonnement par impulsions à une puissance moyenne égale à environ 18 W.

12. Procédé de fabrication selon l'une quelconque des revendications 1 à 11, **caractérisé en ce que** l'étape de décapage et texturation (103) est configurée pour former un réseau (8) de cratères (10) sur l'au moins une portion du conducteur électrique nu (5).

13. Conducteur électrique nu prévu pour équiper un appareillage électrique, **caractérisé en ce qu'**il est obtenu directement par la mise en oeuvre du procédé selon l'une quelconque des revendications 1 à 12, et qu'il présente un réseau (8) de cratères (10) sur au moins une portion décapée et texturée.

14. Conducteur électrique nu selon la revendication 13, **caractérisé en ce que** le réseau (8) de cratères (10) présente un motif périodique et/ou les cratères (10) présentent chacun une dépression (14) en renfoncement dans la portion du conducteur électrique nu et un bord périphérique (15) autour de la dépression et en saillie.

15. Appareillage électrique comportant au moins un conducteur électrique nu selon l'une des revendications 13 et 14.
